# EUROPEAN PATENT SPECIFICATION

(11) **EP 1 164 177 B1**
(45) Date of publication and mention of the grant of the patent: **18.05.2005**
(21) Application number: 01113415.2
(22) Date of filing: 01.06.2001
(51) Int. Cl.: C09J 7/02

(54) **Sheet for protecting paint film**
Folie zum Schutz eines Lackfilms
Feuille pour protéger un film de peinture

(30) Priority: 09.06.2000 JP 2000173048
(43) Date of publication of application: 19.12.2001
(73) Proprietor: NITTO DENKO CORPORATION, Osaka (JP); KANSAI PAINT CO., LTD., Amagasaki-shi, Hyogo (JP)
(72) Inventor: Inoue, Tsuyoshi, Ibaraki-shi, Osaka (JP); Sano, Kenji, Ibaraki-shi, Osaka (JP); Kobayashi, Yoshiki, Ibaraki-shi, Osaka (JP); Shibata, Kenichi, Ibaraki-shi, Osaka (JP); Hayashi, Keiji, Ibaraki-shi, Osaka (JP); Horada, Mitsuru, Ibaraki-shi, Osaka (JP); Matsui, Komaharu, Hiratsuka-shi, Kanagawa (JP); Akaki, Yu, Hiratsuka-shi, Kanagawa (JP); Eda, Takeshi, Amagasaki-shi, Hyogo (JP); Ueda, Hirosih, Amagasaki-shi, Hyogo (JP)
(74) Representative: Grünecker, Kinkeldey, Stockmair & Schwanhäusser Anwaltssozietät

(56) References cited:
- EP-A- 0 273 585
- EP-A- 0 611 156

## Description

The present invention relates to a sheet for protecting a paint film which, even when applied to a paint film on which fouling substances are apt to remain after protective sheet removal, can be satisfactorily adhered efficiently to the paint film and can be easily peeled therefrom after long-term adhesion without fouling the paint film, and which is suitable for the surface protection of automotive bodies and parts, coated steel sheets, etc.

A protective coating formed by applying a wax type coating material in a thickness of from 5 to 40 µm has conventionally been known as a means for preventing the paint films of coated automobiles, coated automotive parts, and the like from being damaged or impaired in gloss, color, etc., by suspended or colliding matters such as dust particles, rain, and stone debris when such coated products are loaded on trucks or ships and transported to remote areas such as overseas countries. However, this means has had the following and other problems. It is difficult to form a wax coating having an even thickness, so that even protection is difficult to obtain. Wax coatings are apt to soil and have poor resistance to acid rain. Components of the wax infiltrate into the paint film of the coated product to cause discoloration, etc. In addition, the formation and removal of wax coatings necessitate much labor and are apt to arouse environmental problems concerning use of a solvent, waste liquid treatment, etc.

On the other hand, various surface-protective sheets are known which comprise a substrate and a pressure-sensitive adhesive layer formed thereon. Proposed for use in the protection of paint films is a protective sheet having a radiation-curable pressure-sensitive adhesive layer having a lowered glass transition point or a rubber-based pressure-sensitive adhesive layer comprising polyisobutylene or the like (see JP-A-2-199184 (the term "JP-A" as used herein means an "unexamined published Japanese patent application") and JP-A-6-73352). This technique of paint film protection with a sheet is capable of eliminating the problems associated with the technique of paint film protection with a wax. However, the conventional protective sheet has had a problem that the sheet, when applied to paint films of some kinds, is apt to leave fouling substances on the paint films after peeling therefrom.

EP-A-611156 discloses an anaerobic adhesive sheet comprising a substrate and coated thereon an anaerobic adhesive comprising:
(A) a rubber-based resin having adhesion properties,
(B) a compound which has both, the capability of absorbing oxygen and the capability of forming peroxide,
(C) an ethylenically unsaturated monomer or oligomer, and
(D) an organic peroxide.
The amount of the compound (B), which may be a terpene resin or terpene phenol resin, is 30 to 150 parts by weight per 100 parts by weight of the adhesive rubber-based resin (A).

EP-A-273585 relates to a process for producing a coated substrate which comprises applying to a moving substrate a solution of an adhesive formulation which comprises a mixture of a rubber and a tackifier. The tackifier may be a resin formed from aromatic monomers with polyterpenes or derivatives thereof. The ratio of the rubber to the tackifier may be between 1:2 to 2:1.

The problem of fouling is attributable to the transfer of additives contained in the pressure-sensitive adhesive layer. Specifically, it has been found that component mixing occurs at the interface between the paint film and the pressure-sensitive adhesive layer and, as a result, additives contained in the pressure-sensitive adhesive layer remain on the paint film surface after the protective sheet is peeled off.

It was the object of the invention to provide a sheet for paint film protection which can be efficiently applied and satisfactorily adhered to a paint film and retain the satisfactorily adherent state over long and which, after accomplishment of the protection, can be easily peeled off and is less apt to foul the paint film even when the paint film is of the type susceptible to fouling upon protective sheet removal, thereby necessitating no cleaning treatment.

This object is achieved by a sheet for protecting a paint film, the sheet comprising a substrate and formed on one side thereof a rubber-based pressure-sensitive adhesive layer which comprises a rubbery polymer and incorporated therein a copolymer of at least one aromatic compound with at least one terpene compound or aliphatic hydrocarbon compound, wherein the amount of the copolymer incorporated is from 0.2 to 5 parts by weight per 100 parts by weight of the rubbery polymer.

According to the invention, a sheet for protecting a paint film can be obtained which can be efficiently applied and satisfactorily adhered to a paint film and retain the satisfactorily adherent state over a long period of time. The adherent sheet is less apt to pose the problem that it peels off by itself. Even when the paint film is of the type in which fouling substances are apt to remain after protective sheet removal, the sheet can be easily peeled therefrom after accomplishment of the protection and is less apt to leave fouling substances on the paint film due to the incorporation of the copolymer. No cleaning treatment is hence necessary. Although details of this effect are unclear, it is thought that the copolymer functions as a compatibilizing agent for the rubbery polymer and fouling substances to enable the fouling substances to remain in the pressure-sensitive adhesive layer without being transferred to the paint film surface.

The sheet for protecting a paint film according to the invention comprises a substrate and formed on one side thereof a rubber-based pressure-sensitive adhesive layer which comprises a rubbery polymer and incorporated therein a copolymer of at least one aromatic compound with at least one terpene compound or aliphatic hydrocarbon compound. The rubbery polymer serving as the base polymer of the rubber-based pressure-sensitive adhesive layer is not particularly limited. One or more appropriate rubbery polymers can be used as the base polymer.

Examples of the rubbery polymer include diene polymers such as polyisoprene and polybutadiene and hydrogenated polymers obtained therefrom; olefin polymers such as ethylene/propylene rubbers, ethylene/α-olefin copolymers, ethylene/propylene/α-olefin copolymers, and propylene/α-olefin copolymers; butyl rubber and polyisobutylene; styrene/diene hydrocarbon random copolymers such as styrene/butadiene rubbers and hydrogenated copolymers obtained therefrom; A/B/A type styrene block polymers such as styrene/butadiene/styrene (SBS), styrene/isoprene/styrene (SIS) , styrene/ethylene-butylene copolymer/styrene (SEBS), and styrene/ethylene-propylene copolymer/styrene (SEPS); A/B type styrene block polymers such as styrene/butadiene (SB), styrene/isoprene (SI), styrene/ethylene-butylene copolymer (SEB), and styrene/ethylene-propylene copolymer (SEP); A/B/C type crystalline styrene/olefin block polymers such as styrene/ethylene-butylene copolymer/olefin crystal (SEBC) and hydrogenated polymers obtained therefrom; C/B/C type crystalline olefin block polymers such as olefin crystal/ethylene-butylene copolymer/olefin crystal (CEBC) and hydrogenated polymers obtained therefrom; and styrene/olefin crystal block copolymers and hydrogenated polymers obtained therefrom.

Examples of the copolymer of at least one aromatic compound with at least one terpene compound or aliphatic hydrocarbon compound, which is incorporated in the rubbery polymer, include copolymers having an aromatic moiety consisting of polystyrene or a phenolic, xylene, or another aromatic resin and a terpene or aliphatic hydrocarbon moiety consisting of a terpene resin, such as an (α, β)-pinene polymer or diterpene polymer, an aliphatic (including alicyclic) petroleum resin, a hydrogenated resin obtained therefrom, or the like. Specific examples thereof include styrene/hydrogenated terpene copolymer resins, phenol/terpene copolymer resins, phenol/hydrogenated terpene copolymer resins, aliphatic/aromatic copolymer petroleum resins, and partially hydrogenated resins obtained by hydrogenating the aliphatic moiety of the petroleum resins. The hydrogenated terpene resin is a resin obtained by partially or completely hydrogenating the terpene resin.

Those copolymers can be used alone or in combination of two or more thereof. Styrene/hydrogenated terpene copolymer resins are preferred from the standpoints of long-term stability of pressure-sensitive adhesive properties, hue, adhesion to paint films, etc. The amount of the copolymer to be incorporated is from 0.2 to 5 parts by weight, preferably from 0.3 to 4 parts by weight, more preferably from 0.5 to 3 parts by weight, per 100 parts by weight of the rubbery polymer from the standpoints of preventing the copolymer from serving as a substance which itself is causative of paint film fouling, and of preventing any substance from remaining on and fouling paint films. Even when incorporated in such a relatively small amount, the copolymer advantageously produces the effect of preventing substances which have bled from a paint film from causing paint film fouling after protective-sheet removal.

Appropriate additives can be incorporated in forming the pressure-sensitive adhesive layer for the purpose of regulating pressure-sensitive adhesive properties, etc. Examples of such additives include softeners, silicone polymers, acrylic polymers, tackifiers other than the copolymer described above, antioxidants, light stabilizers such as hindered amines, ultraviolet absorbers, fillers such as calcium oxide, magnesium oxide, silica, zinc oxide, and titanium oxide, and pigments. Even when the incorporation of such an additive may result in fouling due to interaction with a substance which has bled from a paint film, this fouling can be prevented by the incorporation of the copolymer described above.

The incorporation of a softener is usually effective in improving adhesive strength. Examples of the softener include low molecular polymers such as polyisobutylene, ethylene/propylene rubbers, polyisoprene, and polybutadiene. One or more appropriate softeners can be used. Preferred softeners are low molecular polymers in which the unsaturated bonds have been hydrogenated, such as hydrogenated polyisoprene, hydrogenated polybutadiene, hydrogenated polybutadiene(mono or di)ol, hydrogenated liquid polyisoprene (mono or di)ol, and hydrogenated polybutadiene or polypropylene modified with a carboxylic acid.

From the standpoint of moderately enhancing the strength of adhesion to paint films and other standpoints, it is preferred to use a softener having a number average molecular weight of from 1,000 to 200,000, preferably from 1,100 to 150,000, more preferably from 1,200 to 100,000. Although the amount of the softener to be incorporated can be suitably determined according to the desired adhesive strength, etc. , it is generally 150 parts by weight or smaller, preferably 100 parts by weight or smaller, more preferably 60 parts by weight or smaller, per 100 parts by weight of the rubbery polymer.

The incorporation of a silicone polymer is usually effective in improving peelability. One or more appropriate silicone polymers having a backbone made up of siloxane bonds and having any of a wide range of molecular weights can be used. Examples thereof include dimethylpolysiloxane, methylphenylpolysiloxane, methylhydrogenpolysiloxane, and such polysiloxanes modified with epoxy, alkyl, amino, carboxyl, alcohol, fluorine, alkyl-aralkyl polyether, epoxy polyether, polyether, or the like. From the standpoints of attaining a satisfactory adherent state, stably maintaining peelability, etc., the amount of the silicone polymer to be incorporated is generally 5 parts by weight or smaller, preferably 3 parts by weight or smaller, more preferably from 0.005 to 2 parts by weight, per 100 parts by weight of the rubbery polymer.

On the other hand, an acrylic polymer may be incorporated for the purposes of improving wetting ability to thereby enhance adhesion to paint films and inhibiting the adhesive strength from increasing with time in a high temperature atmosphere. It is preferred from these standpoints to use an acrylic polymer having a weight average molecular weight of from 1,000 to 500,000. An acrylic polymer having a molecular weight in that range, which is liquid at ordinary temperature, is thought to function in the following manner. The acrylic polymer is present in a higher concentration in a surface layer of the pressure-sensitive adhesive layer because of its compatibility with the rubbery polymer to thereby satisfactorily wet paint films. Thus, the acrylic polymer enables the pressure-sensitive adhesive layer to satisfactorily adhere to paint films on which fouling substances are apt to remain after protective-sheet removal and to poorly bondable paint films and other paint films. Furthermore, the acrylic polymer is stable to heat and enables the protective sheet to be satisfactorily peeled off.

If the acrylic polymer has a weight-average molecular weight lower than 1,000, there are cases where the effect of improving adhesive strength may be insufficient due to the too low molecular weight. If the molecular weight thereof exceeds 500,000, there are cases where the pressure-sensitive adhesive layer has poor long-term stability or shows poor peelability after long-term adhesion. From the standpoints of improved adhesive strength, long-term stability, stable peelability, etc., it is preferred to use an acrylic polymer having a weight average molecular weight of from 3,000 to 300,000, preferably from 5,000 to 100,000, more preferably from 10,000 to 50,000. From the standpoints of the ability to wet paint films, etc., it is preferred to use an acrylic polymer having a glass transition temperature of 25°C or lower, preferably 0°C or lower, more preferably -10°C or lower.

Acrylic polymers can be used alone or in combination of two or more thereof. The acrylic polymers are not particularly limited in the monomers therefor, etc. Examples thereof include a polymer produced by polymerizing one or more (meth)acrylates having an alkyl group having 1 to 18 carbon atoms if desired with one or more copolymerizable monomers known for acrylic pressure-sensitive adhesives, such as (meth)acrylamide, by an appropriate method, e.g., solution polymerization. Examples of such acrylic polymers include commercial products available under the trade names of Polyflow No. 55 and Polyflow No. 50E (manufactured by Kyoeisha Chemical Co., Ltd.), Disparon LC-951, Disparon LC-955, and Disparon LC-1985 (manufactured by Kusumoto Chemicals Ltd.), and Modaflow (manufactured by Monsanto Co.).

The amount of the acrylic polymer to be incorporated is preferably from 0.05 to 40 parts by weight per 100 parts by weight of the rubbery polymer. If the amount thereof is smaller than 0.05 parts by weight, there are cases where the effect of improving adhesive strength is insufficient due to the too small incorporation amount. If the amount thereof exceeds 40 parts by weight, there are cases where the acrylic polymer is present in a higher concentration in a surface layer of the pressure-sensitive adhesive layer to considerably reduce the adhesive strength and this is apt to arouse troubles. For example, when this protective sheet is applied to, e.g., the paint film of a motor vehicle and the vehicle is driven, the protective sheet peels off by itself. From the standpoints of attaining a satisfactory adherent state, etc., the amount of the acrylic polymer to be incorporated is preferably 30 parts by weight or smaller, more preferably 20 parts by weight or smaller, most preferably from 0.1 to 10 parts by weight, per 100 parts by weight of the rubbery polymer.

On the other hand, the incorporation of a tackifier also is usually effective in improving adhesive strength. One or more appropriate tackifiers known for use in pressure-sensitive adhesives may be used. Examples thereof include petroleum resins such as aliphatic, aromatic, and alicyclic petroleum resins, coumarone-indene resins, terpene homopolymer resins, (polymerized) rosin resins, (alkyl)phenolic resins, xylene resins, and resins obtained by hydrogenating these resins. The amount of the tackifier to be incorporated is preferably 100 parts by weight or smaller, more preferably 80 parts by weight or smaller, most preferably 60 parts by weight or smaller, per 100 parts by weight of the rubbery polymer from the standpoint of avoiding the problem of adhesive transfer and improving adhesive strength by inhibiting the cohesive force from decreasing. The copolymer described above is also effective as a tackifier.

As the substrate on which a pressure-sensitive adhesive layer is to be formed, a suitable substance can be used according to, e.g., the intended use of the sheet for protecting a paint film. Examples of the substrate include a film, a porous film, a porous sheet such as a fibrous sheet or non-woven fabric, a foam, and a composite sheet obtained by laminating two or more thereof. In general, the substrate is constituted of a single polyolefin such as polyethylene or polypropylene, a mixture of two or more of such polyolefins, or a thermoplastic resin such as a polyester or polyamide. Of these substrate materials, polyolefins are especially preferred from the standpoint of suitability for incineration after peeling. The porous sheet has an advantage that the protective sheet employing this substrate can have improved peelability because the pressure-sensitive adhesive layer formed on the porous substrate can have a surface reflecting the surface roughness of the substrate. Another advantage of the porous sheet is that because of its air permeability and moisture permeability, the protective sheet employing this substrate has the property of allowing infiltrated rain water to readily volatilize. Namely, the paint film from which this protective sheet has been peeled is less apt to bear traces of the protective sheet. The thickness of the substrate consisting of a film is generally from 5 to 300 µm, preferably from 20 to 100 µm. However, the thickness thereof should not be construed as being limited. to that range.

Appropriate additives such as those mentioned above may be incorporated into the substrate for the purposes of deterioration prevention, etc. Examples of the additives include antioxidants, ultraviolet absorbers, light stabilizers such as hindered amines, antistaticagents, and inorganic fillers. The substrate may be one having ultraviolet-shielding properties. Use of an ultraviolet-shielding substrate is desirable in that it prevents the deterioration of itself and of the pressure-sensitive adhesive layer outdoors and thereby enables the protective sheet to stably retain satisfactory peelability free from substrate breakage and adhesive transfer over long. An especially preferred ultraviolet-shielding substrate is one in which the transmittance of ultraviolet having wavelengths of from 190 to 370 nm is 5% or lower, preferably 3% or lower, more preferably 1% or lower, most preferably 0.5% or lower.

A ultraviolet-shielding substrate can be formed by an appropriate technique by, e.g., a method in which ultraviolet-shielding particles are dispersedly incorporated therein. Specific examples thereof include: a method in which a polymer containing ultraviolet-shielding particles is formed into a film or fibers by an appropriate technique to form a film or laminated layer; a method in which these fibers are used to form a porous sheet; a method in which a coating fluid containing ultraviolet-shielding particles is deposited on a surface of a substrate-forming film, fibers, or laminated layer to form a coating film; and a method comprising forming a film of an appropriate metal, e.g., stainless steel, on a substrate by vapor deposition.

As the ultraviolet-shielding particles can be used appropriate particles which reflect or absorb ultraviolet. Examples thereof include titanium white, red iron oxide, zinc white, alumina, tin oxide, and carbon black. The coating fluid can, for example, be a dispersion obtained by mixing a binder ingredient comprising an appropriate resin such as an acrylic, urethane, or polyester resin with ultraviolet-shielding particles in a medium comprising an appropriate organic solvent, e.g., toluene, water, or the like.

For forming the sheet for protecting a paint film, a known technique for forming an adhesive sheet can be used. Examples thereof include: a method in which either a solution of a material for forming a pressure-sensitive adhesive layer in a solvent or a melt of the material is applied to a substrate; a method in which a pressure-sensitive adhesive layer is formed on a separator by that method and is then transferred to a substrate; a method in which a material for forming a pressure-sensitive adhesive layer is applied to a substrate by extrusion coating; a method in which a material for forming a substrate and a material for forming a pressure-sensitive adhesive layer are coextruded in two or more layers; a method in which a pressure-sensitive adhesive layer alone is laminated to a substrate; a method in which a pressure-sensitive adhesive layer and another layer are laminated to a substrate; and a method in which a pressure-sensitive adhesive layer and one or more substrate-forming materials such as a film and laminated layer are formed by laminating.

Although the pressure-sensitive adhesive layer may have been formed over the whole one-side surface of the substrate by any of the methods described above or another method, it may be one formed so as to be air-permeable. Examples of such a pressure-sensitive adhesive layer include a layer formed by a method in which a material for forming a pressure-sensitive adhesive layer is formed into fibers by an appropriate technique such as, e.g., melt blowing or curtain spraying and the fibers are deposited in a layered arrangement, especially in the form of nonwoven fabric or the like, and further include a patterned pressure-sensitive adhesive layer formed by partly coating a substrate with a pressure-sensitive adhesive in the form of dots, stripe, etc.

A pressure-sensitive adhesive layer having an embossing or having a finely roughened surface structure reflecting the surface roughness of a substrate may be formed. This pressure-sensitive adhesive layer has an advantage that air bubble trapping and other troubles are less apt to occur when the protective sheet is applied. Although the thickness of the pressure-sensitive adhesive layer to be formed may be suitably determined according to the desired adhesive strength, etc., it is generally 100 µm or smaller, preferably from 1 to 50 µm, more preferably from 3 to 20 µm. If.desired, the pressure-sensitive adhesive layer may be protected by provisionally covering it with a separator or the like until use.

That side of the substrate on which a pressure-sensitive adhesive layer is to be formed may be subjected according to need to a surface treatment for improving adhesion of the pressure-sensitive adhesive layer, etc. Examples of the treatment include corona treatment, flame treatment, plasma treatment, sputtering/etching treatment, and coating with a primer or the like. On the other hand, a coating layer comprising an appropriate release agent such as a silicone, long chain alkyl resin, or fluororesin may be formed on that side of the substrate on which a pressure-sensitive adhesive layer is not formed, for the purpose of, e.g., obtaining a roll which can be easily unwound. The surface of the pressure-sensitive adhesive layer also may be subjected according to need to a suitable surface treatment such as those mentioned above for the purpose of regulating the pressure-sensitive adhesive properties, etc.

The sheet for protecting a paint film according to the invention can be advantageously applied to coated adherends such as automotive bodies, automotive parts including bumpers, metal sheets including steel sheets, and formed metal sheets for the purpose of surface protection against colliding minute substances, chemicals, etc. or for other purposes. Such coated adherends are, for example, products or parts coated with a paint film based on a polyester-melamine, alkyd-melamine, acrylic-melamine, or acrylic-urethane resin, an acrylic/polyacid hardener system, etc. However, the paint film is not particularly limited.

The invention will be explained below in more detail by reference to the following examples, but the invention should not be construed as being limited thereto.

### EXAMPLE 1

In 700 parts of toluene were dissolved 75 parts (parts by weight; the same applies hereinafter) of polyisobutylene having a weight average molecular weight, measured by gel permeation chromatography and calculated for standard polystyrene (the same applies hereinafter), of 870,000, 25 parts of polyisobutylene having a weight average molecular weight of 80,000, and 1 part of a styrene/hydrogenated terpene copolymer resin (Clearon K100, manufactured by Yasuhara Chemical Co., Ltd.). This solution was applied to one side of a 40 µm-thick film of a polypropylene/polyethylene blend. The coating was heated at 80°C for 3 minutes to form a rubber-based pressure-sensitive adhesive layer having a thickness of 10 µm. Thus, a sheet for protecting a paint film was obtained.

### EXAMPLE 2

A sheet for protecting a paint film was obtained in the same manner as in Example 1, except that the amount of the styrene/hydrogenated terpene copolymer resin was changed to 0.5 parts.

### EXAMPLE 3

A sheet for protecting a paint film was obtained in the same manner as in Example 1, except that the amount of the styrene/hydrogenated terpene copolymer resin was changed to 3 parts.

### EXAMPLE 4

A sheet for protecting a paint film was obtained in the same manner as in Example 1, except that the amount of the styrene/hydrogenated terpene copolymer resin was changed to 0.2 parts.

### EXAMPLE 5

A sheet for protecting a paint film was obtained in the same manner as in Example 1, except that a hydrogenated polymer (Arkon M-100, manufactured by Arakawa Chemical Industries, Ltd.) obtained by hydrogenating the non-aromatic parts of an aliphatic/aromatic copolymer was used in place of the styrene/hydrogenated terpene copolymer resin.

### EXAMPLE 6

In 700 parts of toluene were dissolved 100 parts of polyisobutylene having a weight average molecular weight of 550,000, 0.2 parts of an alkylphenolic resin, 0.1 part of poly[{6-(1,1,3,3-tetramethylbutyl)amino-1,3,5-triazine}{(2, 2,6,6-tetramethyl-4-piperidyl)imino}hexamethylene{(2,2,6,6-tetramethyl-4-piperidyl) imino}], 0.2 parts of an acrylic ester copolymer (Modaflow), and 1 part of a styrene/hydrogenated terpene copolymer resin (Clearon K100). A sheet for protecting a paint film was obtained in the same manner as in Example 1, except that the solution thus prepared was used.

### EXAMPLE 7

A sheet for protecting a paint film was obtained in the same manner as in Example 6, except that the amount of the styrene/hydrogenated terpene copolymer resin was changed to 5 parts.

### COMPARATIVE EXAMPLE 1

A sheet for protecting a paint film was obtained in the same manner as in Example 1, except that the styrene/hydrogenated terpene copolymer resin was omitted.

### COMPARATIVE EXAMPLE 2

A sheet for protecting a paint film was obtained in the same manner as in Example 6, except that the styrene/hydrogenated terpene copolymer resin was omitted.

### COMPARATIVE EXAMPLE 3

A sheet for protecting a paint film was obtained in the same manner as in Example 1, except that 1 part of a hydrogenated terpene resin (Clearon P-115, manufactured by Yasuhara Chemical Co., Ltd.) was incorporated in place of the styrene/hydrogenated terpene copolymer resin.

### EVALUATION TEST

The paint-protective sheets (50 mm square) obtained in the Examples and Comparative Examples were applied at 23°C to a paint film formed from Amilac 1000 (trade mane; manufactured by Kansai Paint Co., Ltd.). The protective sheets applied were subjected to a load test at 80°C for 24 hours or at 60°C and 95% RH for 24 hours, subsequently allowed to stand at 23°C for 1 hour, and then peeled off. After the peeling, the paint film was visually examined for fouling.

The results of the evaluation are shown in the following Table.

**Table**

| | 80°C, 24 hr | 60°C/95%, 24 hr |
|---|---|---|
| Example 1 | No fouling | No fouling |
| Example 2 | No fouling | No fouling |
| Example 3 | No fouling | No fouling |
| Example 4 | No fouling | No fouling |
| Example 5 | No fouling | No fouling |
| Example 6 | No fouling | No fouling |
| Example 7 | No fouling | No fouling |
| Comparative Example 1 | Fouling occurred | Fouling occurred |
| Comparative Example 2 | Fouling occurred | Fouling occurred |
| Comparative Example 3 | Fouling occurred | Fouling occurred |

## Claims

1. A sheet for protecting a paint film, said sheet comprising a substrate and formed on one side thereof a rubber-based pressure-sensitive adhesive layer which comprises a rubbery polymer and incorporated therein a copolymer of at least one aromatic compound with at least one terpene compound or aliphatic hydrocarbon compound,
wherein the amount of the copolymer incorporated is from 0.2 to 5 parts by weight per 100 parts by weight of the rubbery polymer.

## Patentansprüche

1. Folie zum Schutz eines Lackfilms, wobei die Folie einen Träger und auf einer Seite davon eine druckempfindliche Klebstoffschicht auf Kautschukbasis gebildet umfasst, die ein kautschukartiges Polymer und darin eingearbeitet ein Copolymer von wenigstens einer aromatischen Verbindung mit wenigstens einer Terpenverbindung oder aliphatischen Kohlenwasserstoffverbindung umfasst, worin die Menge des eingearbeiteten Copolymers 0,2 bis 5 Gewichtsteile pro 100 Gewichtsteile des kautschukartigen Polymers beträgt.

## Revendications

1. Feuille pour protéger un film de peinture, ladite feuille comprenant un substrat et formée sur un côté de celui-ci une couche d'adhésif sensible à la pression à base de caoutchouc qui comprend un polymère caoutchouteux et incorporé dans celui-ci un copolymère d'au moins un composé aromatique avec au moins un composé terpénique ou un composé d'hydrocarbure aliphatique,
dans laquelle la quantité de copolymère incorporée est de 0,2 à 5 parties en poids pour 100 parties en poids de polymère caoutchouteux.
